# EUROPÄISCHE PATENTSCHRIFT

(11) **EP 2 053 538 B1**
(45) Veröffentlichungstag und Bekanntmachung des Hinweises auf die Patenterteilung: **26.02.2014**
(21) Anmeldenummer: 07119239.7
(22) Anmeldetag: 25.10.2007
(51) Int. Cl.: G06K 9/00, G06T 7/00, F16P 3/14

(54) **Absicherung eines Überwachungsbereichs und visuelle Unterstützung einer automatisierten Bearbeitung**
Securing a surveillance area and visual support for automatic processing
Protection d'une zone de surveillance et support visuel d'un usinage automatisé

(43) Veröffentlichungstag der Anmeldung: 29.04.2009
(73) Patentinhaber: SICK AG, 79183 Waldkirch (DE)
(72) Erfinder: Wüstefeld, Martin, 79350, Sexau (DE); Rapp, Ralph, 79346, Endingen (DE); Plasberg, Dr. Georg, 79353, Bahlingen (DE)
(74) Vertreter: Ludewigt, Christoph

(56) Entgegenhaltungen:
- EP-A- 1 457 730
- EP-A- 1 586 423
- WO-A-2007/085330

## Beschreibung

Die Erfindung betrifft eine optoelektronische Vorrichtung mit mindestens einem optoelektronischen Sensor zur Erfassung von ortsaufgelösten Informationen nach dem Oberbegriff von Anspruch 1 sowie ein entsprechendes Verfahren zur Absicherung eines Überwachungsbereichs und zur visuellen Unterstützung einer automatisierten Bearbeitung nach dem Oberbegriff von Anspruch 14.

Zur Überwachung von Gefahrenstellen, besonders von gefährlichen Maschinen, können kamerabasierte Schutzeinrichtungen eingesetzt werden. Eine besonders anpassbare und genaue Überwachung ist dabei mit dreidimensionalen Bilddaten möglich. Hierbei sind verschiedene Verfahren bekannt, beispielsweise Stereoskopie, Lichtlaufzeitverfahren, aktive Triangulation, die Auswertung von Störungen passiver zweidimensionaler Muster oder von Verzerrungen aktiv projizierter Muster. Ziel solcher Überwachungen ist jeweils, einen als kritisch einzustufenden Zustand zu erkennen und dann die Gefahrenquelle abzusichern.

Der Wunsch in der Sicherheitstechnik ist, Schutzfelder um derartige Gefahrenquellen völlig dynamisch zu überwachen, also einen Eingriff durch Bedienperson immer dann noch zuzulassen, wenn dadurch keine Gefährdung ausgelöst wird. Diese Mensch-Maschine-Interaktion ist vor allem nützlich bei nicht gänzlich automatisierbaren Arbeitsschritten, in denen also Mensch und Maschine gemeinsam arbeiten. Technische Lösungen, gerade mittels dreidimensionaler Bildüberwachungen die Sicherheit des Bedienpersonals bei derartigen Interaktionen zu garantieren, scheitern heutzutage noch an der nicht völligen Zuverlässigkeit der dreidimensionalen Bildalgorithmen und dem hohen Rechenaufwand.

In einer herkömmlichen sicherheitstechnischen Lösung wird ein dreidimensionaler Bildsensor oberhalb einer gefährdenden Maschine installiert, und es werden virtuelle Wände konfiguriert, die auf unzulässige Objekteingriffe überwacht werden. Ein solcher 3D-Bildsensor hat aber ein pyramidenförmiges Sichtfeld, innerhalb dessen schon aufgrund der Perspektive die Einrichtung der notwendigen Schutzfelder wegen ihrer hohen Komplexität Zeit und Fachkenntnisse erfordert. Dieser Konfigurationsaufwand steht oft keinem hinreichenden Gewinn an Nutzen gegenüber, wenn man mit klassischen Absicherungen etwa durch Lichtgitter vergleicht.

Es ist andererseits bekannt, mit visueller Unterstützung automatisierte Verarbeitungsschritte durchzuführen. Beispiele können die visuelle Klassifikation und anschließende Sortierung von Teilen, die Einschätzung der Lage eines Objektes zum Greifen durch einen Roboter, Qualitätsüberprüfungen eines einzubauenden Teiles oder eines Arbeitsergebnisses und viele weitere denkbare Automatisierungsaufgaben sein.

Wegen der unterschiedlichen Anforderungen an Sicherheits- und Automatisierungsaufgaben etwa hinsichtlich Zeitauflösung, Genauigkeit, Bildauswertungsverfahren und Ausfallsicherheit werden üblicherweise verschiedene Systeme eingesetzt, um die sicherheitstechnischen Aspekte einerseits und die Automatisierungstechnik andererseits abzudecken. Dies führt zu einem entsprechenden erhöhten Kosten-, Montage- und Inbetriebnahmeaufwand sowie Platzbedarf.

Aus der EP 1 589 279 A2 ist eine kamerabasierte Pressenabsicherung bekannt, welche mit dem Oberwerkzeug mitfährt und dieses somit dynamisch mit einer Schutzglocke umgibt. Über die sicherheitstechnische Überwachung auf Eingriffe durch Bedienpersonal in den Arbeitsbereich kann die Bildauswertung auch Relativpositionen zwischen Werkstücken oder Werkzeugbereichen bestimmen und somit beispielsweise den gewünschten Biegewinkel überprüfen. Das System erzeugt aber keine dreidimensionalen Daten und ist auf eine sehr spezielle Anwendung beschränkt, nämlich die Pressenabsicherung. Eine Mensch-Maschine-Interaktion ist hier nicht einmal erwünscht, da nach Einlegen des Werkstücks das Bedienpersonal für den eigentlichen Bearbeitungsschritt Abstand halten muss. Nur wegen dieser sehr spezifischen Problemstellung ist hier eine doppelte serielle Auswertung auf Sicherheitsaspekte und auf Qualitätssicherungsaspekte technisch umsetzbar und auch hinsichtlich der Hardwareanforderungen praktikabel.

Es ist daher Aufgabe der Erfindung, eine mit verfügbaren Bildauswertungsverfahren auf verfügbarer Hardware implementierbare Annäherung an eine möglichst weitgehende Mensch-Maschine-Interaktion zu finden.

Diese Aufgabe wird durch eine optoelektronische Vorrichtung gemäß Anspruch 1 sowie ein Verfahren zur Absicherung eines Überwachungsbereichs und zur visuellen Unterstützung einer automatisierten Bearbeitung gemäß Anspruch 14 gelöst. Mit der erfindungsgemäßen Lösung, im Überwachungsbereich Sicherheitsbereiche einerseits und Automatisierungsbereiche andererseits zu definieren, wird durch Installation nur eines Systems sowohl Schutz wie auch Unterstützung bei Automatisierungsaufgaben erreicht. Dies führt zu einer geringeren Gesamtinvestition mit nur einmaligem Installations- und Konfigurationsaufwand bei gleichzeitiger Lösung zweier Aufgabenstellungen.

Dabei geht die Erfindung von dem Prinzip aus, die Auswertungen für Sicherheitsaufgaben und Automatisierungsaufgaben voneinander abzutrennen, indem jeweils voneinander getrennte Zonen vorgesehen werden. Probleme, die sich durch zu komplexe Auswertungen bei Vermischung der beiden Aufgaben ergeben könnten, werden damit von vorneherein vermieden. Die erfindungsgemäße Lösung ist auch skalierbar und modular erweiterbar, indem zusätzliche Sensoren und entsprechende Rechenkapazitäten nachgerüstet werden. Durch die Trennung von Sicherheit und Automatisierung in einer solchen Erweiterung stehen keine Verflechtungen entgegen, die ohne eine solche Trennung bei einer kombinierten Auswertung eine komplett neue Implementierung nach sich ziehen könnten.

Der Sensor ist vorteilhafterweise ein pixelaufgelöster zeilen- oder matrixförmiger Bildsensor, insbesondere ein visueller 3D-Sensor nach dem Prinzip der Stereoskopie, der aktiven Triangulation oder der Lichtlaufzeit. Im Gegensatz zur Überwachung beispielsweise mit tastenden, entfernungsauflösenden Lichtgittern sind gerade Bildauswertungsalgorithmen von dem Konflikt betroffen, einerseits absolut fehlerfrei arbeiten zu müssen, um Bedienpersonal nicht durch Versagen der Schutzfunktion zu gefährden, und andererseits eine hohe Verfügbarkeit besonders durch schnell arbeitende und auf möglich kostengünstiger Hardware implementierbare Algorithmen zu garantieren. Hier wirkt sich die Trennung in Schutzbereiche und Automatisierungsbereiche besonders vorteilhaft aus. Das genannte, auf Kameras im Allgemeinen bezogene Argumente greift noch schärfer bei dreidimensionalen Bilddaten, bei denen nicht nur die Auswertung der Bilddaten, sondern bereits deren Generierung etwa durch Fehler der Disparitätsschätzung in einer Stereokamera oder durch Mehrfachreflexion bei einer Lichtlaufzeitkamera kritisch sein kann.

Die Auswertungseinheit ist bevorzugt dafür ausgebildet, die Sicherheitsbereiche jeweils in Sicherheits-Auswertungszyklen und die Automatisierungsbereiche in gleichen oder unabhängigen Automatisierungs-Auswertungszyklen auszuwerten, wobei die Sicherheitsbereiche und die Automatisierungsbereiche in jedem Auswertungszyklus gleich definiert sind. In dieser Ausführungsform werden also die Sicherheitsbereiche und die Automatisierungsbereiche durch die Konfiguration fixiert. Das erleichtert die Einrichtung und vereinfacht die Auswertung.

Alternativ ist die Auswertungseinheit dafür ausgebildet, die Sicherheitsbereiche jeweils in Sicherheits-Auswertungszyklen und die Automatisierungsbereiche in gleichen oder unabhängigen Automatisierungs-Auswertungszyklen auszuwerten, wobei die Sicherheitsbereiche und die Automatisierungsbereiche dynamisch über die Auswertungszyklen definiert sind, um insbesondere Bewegungen einer Gefahrenquelle, eines Fahrzeugs oder eines Roboters zu folgen oder sich daran anzupassen. Hierbei können also für komplexere Anwendungen sowohl die Schutzfelder wie auch die für die Automatisierung zu überwachenden Bereiche dynamisch mitgeführt werden und somit zu einer flexibleren und genaueren Auswertung herangezogen werden.

Die Vorrichtung weist vorteilhafterweise eine Schnittstelle für den Empfang weiterer Informationen über den Überwachungsbereich auf, insbesondere zu einem Weggeber, Geschwindigkeitsmessern, einer Anlagen-, einer Fahrzeug- oder einer Robotersteuerung. Damit werden die internen Daten des Sensors von extern ergänzt, um eine genauere oder vereinfachte Auswertung zu ermöglichen.

Die Auswertungseinheit ist bevorzugt dafür ausgebildet, die Sicherheitsbereiche, Automatisierungsbereiche und Freibereiche, zu denen keine Auswertung stattfindet, überlappungsfrei und den gesamten Überwachungsbereich ausfüllend zu definieren. Indem die Bereiche überlappungsfrei sind, werden Konflikte bei den verschiedenen Auswertungen konsequent vermieden. Die Konfiguration von Freibereichen kann der Übersicht dienen und Auswertungen erleichtern, weil auf die Freibereiche jedenfalls kein Algorithmus anzuwenden ist.

Dabei ist bevorzugt die Auswertungseinheit dafür ausgebildet, Sicherheitsbereiche und/oder Automatisierungsbereiche parallelisiert auszuwerten, insbesondere indem die Vorrichtung mindestens ein Auswertungselement für Sicherheitsauswertungen und mindestens ein Auswertungselement für Automatisierungsauswertungen aufweist. Da erfindungsgemäß jedem Bereich eine eigene Bedeutung zugewiesen ist, nämlich ein Schutz oder eine Automatisierungsaufgabe, können die Auswertungen zur Beschleunigung und zur Verwendung jeweils billigerer Auswertungsbausteine nebeneinander stattfinden. Als Auswertungselement kommt jeglicher Logikbaustein, etwa ein Mikroprozessor, ein DSP, ein FPGA, ASIC oder weitere in Frage.

In einer Weiterbildung weist der Sensor eine ROI-Einheit (Region of interest, interessierender Bereich) auf, in welcher Definitionen der Sicherheitsbereiche und/oder der Automatisierungsbereiche als interessierende Bereiche abgelegt werden können, um die Sicherheitsbereiche und/oder die Automatisierungsbereiche bereits im Sensor parallel und/oder unterschiedlich aufzunehmen, weiterzuleiten und/oder auszuwerten. Dies treibt den Parallelisierungsgedanken konsequent voran und sorgt bereits an dem Bildsensor für eine Auftrennung in die gewünschten Auswertungspfade. Damit kann eine beschleunigte und vereinfachte Auswertung vorgenommen werden.

In einer besonderen vorteilhaften Ausführungsform ist eine Warn- und Absicherungseinrichtung vorgesehen, welche auf Detektion der Auswertungseinheit eines unzulässigen Objekteingriffs in einen Sicherheitsbereich eine Warnung ausgeben oder die Gefahrenquelle absichern kann. Damit kann ein unzulässiger Objekteingriff in einen Schutzbereich zur Vermeidung von Verletzungen von Bedienpersonal abgestuft zunächst zu einer Warnung und, wenn ein Objekteingriff sich fortsetzt, zu einem Abschalten der gefährdenden Maschinen oder einer sonstigen Beseitigung der Gefahrenquelle führen.

Dabei ist besonders bevorzugt, wenn die Vorrichtung in Komponenten und Auswertungen, welche mit Sicherheitsaufgaben befasst sind, sicher ausgelegt ist, insbesondere durch zweikanalige Ausführung, Selbsttests in Zyklen unterhalb der geforderten Ansprechzeit, diversitär-redundante Komponenten und Auswertungen oder selbstprüfende Algorithmen. Damit werden Gefährdungen aufgrund von Ausfällen verhindert, wie dies in der Sicherheitstechnik häufig gefordert ist, und zwar sowohl auf den sicherheitsrelevanten Hardwarepfaden wie auf den entsprechenden Softwarepfaden.

In Weiterbildung der Erfindung ist eine Anzeigeeinrichtung vorgesehen, um die Sicherheitsbereiche, die Automatisierungsbereiche und/oder die Freibereiche kenntlich zu machen oder zu visualisieren, und andererseits ist eine Konfigurationseinrichtung vorgesehen, um die Sicherheitsbereiche, die Automatisierungsbereiche und/oder die Freibereiche festzulegen oder zu ändern. Damit kann die Aufteilung in Sicherheitsbereiche und Automatisierungsbereiche auf einfache Weise vorgenommen, überprüft und geändert werden.

Der optoelektronische Sensor ist sowohl für die Erfassung der Informationen der Sicherheitsbereiche wie der Automatisierungsbereiche ausgebildet, und der Sensor kann Informationen aus Sicherheitsbereichen mit unterschiedlicher zeitlicher und/oder räumliche Auflösung an die Auswertungseinheit weitergeben als Informationen aus Automatisierungsbereichen, insbesondere mittels der ROI-Einheit. Das spart den weiteren Sensor und ist daher besonders kompakt. Es ist somit ferner möglich, nach Aufnahme der Bilddaten in der identischen Hardware des einen Sensors zwei unterschiedliche Sensoren zu simulieren, indem Daten der Sicherheitsbereiche anders weitergegeben werden als solche der Automatisierungsbereiche, etwa mit unterschiedlicher Bandbreite, Auflösung oder Wiederholungsfrequenz. Damit sind die Vorteile der Lösung mit zwei unterschiedlichen Sensoren und der kompakten Lösung in nur einem Sensor kombiniert.

In einer vorteilhaften Weiterbildung sind mehrere Sensoren vorgesehen, welche gegenüber dem Überwachungsbereich unterschiedlich orientiert und/oder positioniert sind, um perspektivische Verzerrungen, Auflösungsmängel oder Abschattungseffekte zu vermeiden oder zu reduzieren. Gerade bei der Aufnahme von dreidimensionalen Bilddaten führt die zentrale Perspektive nicht immer zur optimalen Ergebnissen. Indem die Sichtfelder verschiedener Sensoren miteinander kombiniert werden, kann diese Schwäche ausgeglichen werden. Die aus der Kombination entstandenen dreidimensionalen Bilddaten können in gleicher Weise weiterverarbeitet werden wie dreidimensionale Bilddaten nur eines Sensorkopfes, also ganz analog bei der eigentlichen Auswertung in Sicherheitsbereiche und Automatisierungsbereiche unterteilt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer ersten Ausführungsform des erfindungsgemäßen Sensors und dessen Überwachungsbereichs beispielhaft mit jeweils einem Sicherheitsbereich und einem Automatisierungsbereich;
- Fig. 2: ein Blockschaltbild der Ausführungsform gemäß Figur 1; und
- Fig.3: eine schematische Darstellung zur Erläuterung der parallelisierten Auswertung verschiedener als Sicherheitsbereich oder als Automatisierungsbereich festgelegter interessierender Bereiche.

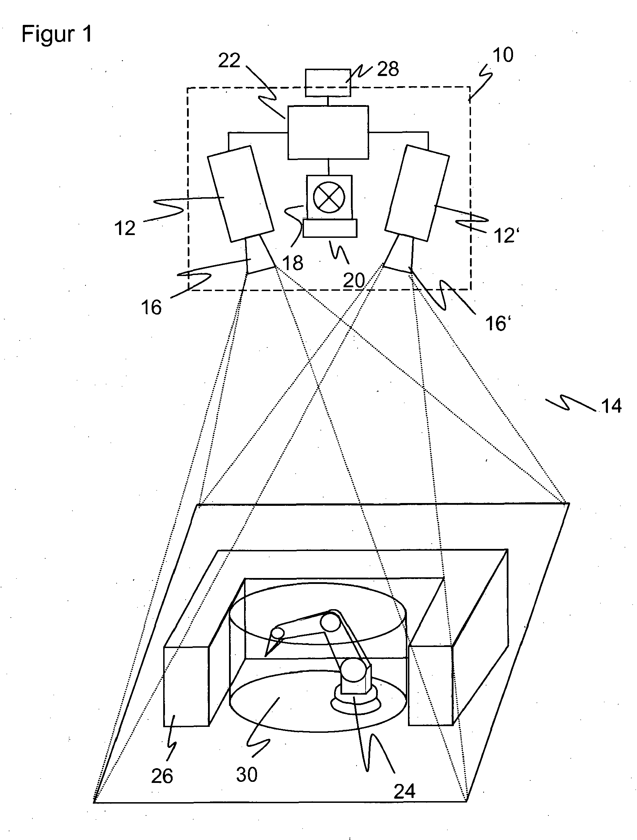

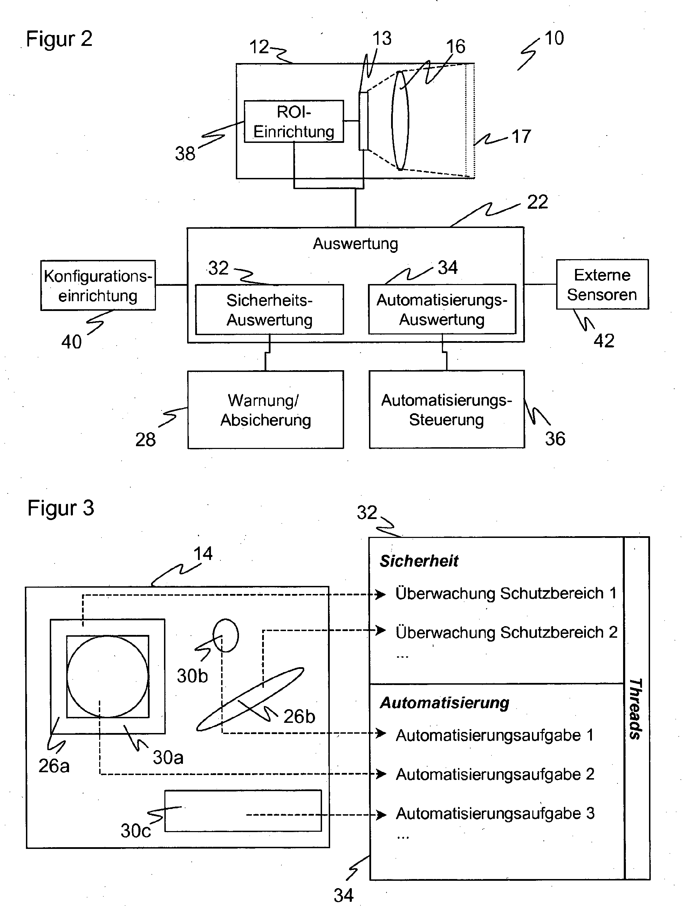

Figur 1 zeigt in einer schematischen dreidimensionalen Darstellung und Figur 2 in einem Blockschaltbild den Aufbau einer Ausführungsform des erfindungsgemäßen Sensors 10 auf Basis von einer dreidimensionalen Stereoskopie-Kamera. Zwei Kameramodule 12, 12' sind in einem bekannten festen Abstand zueinander montiert. Beide Kameras 12, 12' nehmen jeweils das Bild eines Überwachungsbereichs 14 auf. Die Kameras 12, 12' weisen ein nur angedeutetes Objektiv 16, 16' mit einer abbildenden Optik und einer Frontscheibe 17 auf. Der Sichtbereich dieser Optik ist in Figur 1 durch gestrichelte Linien dargestellt, die jeweils eine Sichtpyramide bilden, und umschließt erfindungsgemäß beispielsweise 45°. In jeder Kamera 12, 12' ist ein Bildsensor 13 vorgesehen. Dieser Bildsensor 13 ist ein matrixförmiger Aufnahmechip, der ein rechteckiges Pixelbild aufnimmt, und kann beispielsweise ein CCD- oder ein CMOS-Sensor sein.

In der Mitte zwischen den beiden Kameras 12, 12' ist eine Beleuchtungsquelle 18 angeordnet. Als Lichtquelle für die Beleuchtungsquelle 18 dient mindestens ein Laser oder mindestens eine LED. Zur Kontrasterhöhung und, etwa für die Erzeugung von 3D-Daten anhand von Verzerrungen auf Objekten im Überwachungsbereich 14, kann die Beleuchtungsquelle 18 ein Beleuchtungsmuster erzeugen. Dazu ist in der optischen Achse ein diffraktives optisches Element 20 nachgeordnet, welches das von der Beleuchtungsquelle 18 einfallende Licht nur in bestimmte Teilbereiche des Überwachungsbereichs 14 ablenkt. Das entstehende Beleuchtungsmuster kann ein regelmäßiges, also matrixförmig angeordnetes, Punkt- beziehungsweise Kreismuster, aber auch ein anderes Beleuchtungsmuster sein.

Mit den beiden Kameras 12, 12' und der Beleuchtungsquelle 18 ist eine Steuerung 22 verbunden. Die Steuerung 22 schaltet die Lichtpulse der Beleuchtungsquelle 18 und empfängt Bildsignale von den beiden Kameras 12, 12'. Darüber hinaus berechnet die Steuerung 22 mit Hilfe einer stereoskopischen Disparitätsschätzung dreidimensionale Bilddaten des Raumbereichs 14.

Im von dem Sensor 10 überwachten Raumbereich 14 befindet sich beispielhaft ein Roboterarm 24, der einerseits eine Gefahrenquelle darstellt, andererseits eine visuell unterstützte Automatisierungsaufgabe ausführt, etwa ein Umsetzen oder Verschrauben von Objekten. Wenn sich der Roboter 24 bewegt, darf sich in seinem Bewegungsradius kein unzulässiges Objekt und insbesondere kein Körperteil von Bedienpersonal befinden. Deshalb ist um den Roboterarm 24 ein virtuelles Schutzfeld 26 gelegt, und die Steuerung 22 wertet die Bilddaten in diesem virtuellen Schutzfeld 26 aus, um unzulässige Objekteingriffe zu erkennen.

Da die Erzeugung von dreidimensionalen Bilddaten mit den heute zur Verfügung stehenden Algorithmen nicht gänzlich fehlerfrei sein kann, liegt das Schutzfeld 26 bevorzugt in einem Teil des Raumbereichs 14, in dem sich keinerlei Objekte befinden. Dadurch fällt es der Auswertungseinheit 22 leichter, einen unzulässigen Objekteingriff zu erkennen, weil jegliche Veränderung des Sichtfelds, die nicht Bildaufnahmetoleranzen oder dergleichen geschuldet ist, unzulässig ist. Die Erfindung umfasst jedoch auch solche Ausführungsformen, bei denen vorab erlaubte Objekteingriffe in das Schutzfeld 26 eingelernt werden und nur eine Abweichung von diesen erlaubten Objekteingriffen als unzulässiger Objekteingriff erkannt wird.

Erkennt die Steuerung 22 einen unzulässigen Eingriff in das Schutzfeld 26, so wird über eine Warn- oder Abschalteinrichtung 28 eine Warnung ausgegeben oder die Gefahrenquelle abgesichert, in dem dargestellten Beispiel also der Roboterarm 24 gestoppt. Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird.

Für Anwendungen in der Sicherheitstechnik ist der Sensor 10 fehlersicher ausgelegt. Dies bedeutet unter anderem, dass der Sensor 10 sich selber in Zyklen unterhalb der geforderten Ansprechzeit testen kann und dass der Ausgang zur sowie die Warn- und Abschalteinrichtung 28 selbst sicher, beispielsweise zweikanalig ausgelegt ist. Ebenso ist auch die Steuerung 22 selbst sicher, wertet also zweikanalig aus oder verwendet Algorithmen, die sich selbst prüfen können.

Das Schutzfeld 26 stellt also einen Sicherheitsbereich oder einen Teil eines Sicherheitsbereiches dar, der auf die beschriebene Weise auf sicherheitsrelevante Ereignisse überprüft wird. Sicherheitsaufgaben werden in einer Sicherheitsauswertung 32 der Steuerung 22 ausgeführt. Zusätzlich ist in Figur 1 ein zylinderförmiger Automatisierungsbereich 30 um den Roboterarm 24 dargestellt. Bilddaten aus dem Automatisierungsbereich 30 werden in einer Automatisierungsauswertung 34 der Steuerung 22 ausgewertet. Bei solchen Auswertungen kann es sich zum Beispiel darum handeln, Objekte oder Materialien auf bestimmte Eigenschaften wie Farben oder Größen, ihre Position oder Lage im Raum oder weitere Eigenschaften zu prüfen und damit Automatisierungsaufgaben zu unterstützen, etwa das Greifen oder Sortieren solcher Objekte oder eine Qualitätsprüfung. Das Ergebnis dieser visuellen unterstützenden Automatisierungsaufgaben wird einer Automatisierungssteuerung 36 zur Verfügung gestellt.

In dem Überwachungsbereich 14 werden also voneinander getrennte Sicherheitsbereiche 26 und Automatisierungsbereiche 30 definiert und auf unterschiedlichen Pfaden ausgewertet. Die Trennung der Auswertung kann bereits auf dem Bildsensor 13 erfolgen, indem eine ROI-Einrichtung 38 interessierende Bereiche für den Bildsensor 13 vorgibt. Die ROI-Einrichtung 38 kann abweichend von der Darstellung Teil der Steuerung 22 sein, wie umgekehrt auch die Steuerung 22 in die Kamera 12 integriert sein kann. Die unterschiedliche Behandlung der Bereiche 26, 30 entspricht den unterschiedlichen Anforderungen. Die Sicherheitstechnik erfordert Ausfallsicherheit sowie schnelle und zuverlässige Reaktion. Dazu müssen Algorithmen eingesetzt werden, die in jeder auch a priori völlig unerwarteten Situation Objekteingriffe oder zumindest ihr eigenes Versagen erkennen, und sind daher relativ aufwändig. Für Automatisierungsaufgaben könne andererseits schlanke, schnelle Klassifikatoren auf eingelernte Erkennungsmuster eingesetzt werden, welche nur mit einer kleinen Gruppe bekannter erwarteter Objekte umgehen können und umgehen können müssen.

Dadurch wird eine parallele Verarbeitung von Anfang an vorgenommen, welche durch die Trennung in unterschiedliche Bereiche möglich ist, weil keine Kommunikation zwischen den Auswertungen der verschiedenen Bereiche nötig ist. Es ist aber auch möglich, seriell auszuwerten oder die Parallelverarbeitung erst in der Steuerung 22 beginnen zu lassen, beispielsweise durch Multithreading in einem oder mehreren Prozessorkernen. Die Auswertung kann ebenso in anderen bekannten Logikbausteinen vorgenommen werden, wie DSPs, FPGAs oder in ASIC. Schließlich ist auch denkbar, dass die Steuerung 22 nicht parallelisiert arbeitet und per zeitlichem Multiplexing die Sicherheits- und die Automatisierungsaufgaben abarbeitet.

Um die interessierenden Bereiche, die Sicherheitsbereiche 26 und die Automatisierungsbereiche 30 zu konfigurieren, ist eine Konfigurationseinrichtung 40 vorgesehen. Diese Konfigurationseinrichtung 40 ist umgekehrt auch eine Anzeigeeinrichtung, welche in der Lage ist, die Sicherheitsbereiche 26 und die Automatisierungsbereiche 30 zu visualisieren.

Mittels der Konfigurationseinrichtung 40 kann in nicht abschließender Aufzählung nach Art eines CAD-Programms der jeweilige Bereich händisch über eine Tastatur oder eine grafische Benutzeroberfläche eingegeben, aus einer Datei eingespielt, oder aus einer Ansteuerung des Roboterarms 24 übergeben werden. Als besonders vorteilhaft wird aber erfindungsgemäß angesehen, Informationen über die Sicherheitsbereiche 26 und Automatisierungsbereiche 30, also deren Lage und möglicherweise zeitliche Veränderung, mit einem visuellen Merkmal einzulernen. Ein solches visuelles Merkmal kann ein Code, ein Barcode oder eine Lichtquelle sein, die mit einer bestimmten Wellenlänge, einer bestimmten Form oder einer bestimmten Pulsfolge betrieben wird. Der Code kann auf einer Reflexfolie angebracht sein, um die Erkennungsreichweite bei aktiver Beleuchtung 18 des Sensors 10 zu erhöhen.

Dieses visuelle Merkmal kann an dem Roboterarm 24 insbesondere an Drehpunkten, gefährlichen oder exponierten Punkten befestigt werden, welche dann zum Einlernen der Konfiguration ihre gewöhnliche Bewegung vollzieht, es kann aber auch von einer Bedienperson durch den Raumbereich 14 bewegt werden, um Bereiche 26, 30 zu kennzeichnen. Mittels eines akustischen Passworts zum Starten und Beenden des Konfigurationsmodus kann die Bedienperson sich durch den Raumbereich bewegen und durch Aussprechen des Passworts den Konfigurationsmodus starten und unterbrechen, um an unterschiedlichen Stellen Bereiche 26, 30 zu kennzeichnen. In unzugänglichen Bereichen oder zur weiteren Automatisierung kann das visuelle Merkmal auch von einem Roboter oder einem Fahrzeug getragen werden, welches die Bewegungsbahn einer Gefahrenquelle abfährt.

Die somit konfigurierten Bereiche 26, 30 können für den gesamten Betrieb die gleichen, also statisch sein, sie können sich aber alternativ in einer flexibleren und aufwändigeren Anwendung sowohl in ihrer Position wie auch in ihrer Ausdehnung dynamisch verändern, beispielsweise um Bewegungen von beobachteten Arbeitsmitteln nachzuvollziehen.

Die Steuerung 22 weist außerdem einen Anschluss für weitere externe Sensoren 42 auf, etwa Positionsgeber oder Drehgeber des Roboterarms 24 oder anderer Sensoren zum Generieren von ortsaufgelösten Informationen aus dem Überwachungsbereich 14, um die Bilddaten des Bildsensors 13 zu ergänzen oder zu korrigieren.

Figur 3 stellt eine schematische Draufsicht auf den Überwachungsbereich 14 dar, in dem einige Sicherheitsbereiche 26a, 26b und einige Automatisierungsbereiche 30a, 30b, 30c dargestellt sind. Diese Bereiche stellen zugleich die interessierenden Bereiche dar, welche die ROI-Einrichtung 38 dem Bildsensor 13 vorgibt. Wie jeweils durch gestrichelte Pfeile dargestellt, werden die Auswertungen der Schutzbereiche 26a, 26b einem oder mehreren parallelen Auswertungssträngen oder Threads der Sicherheitsauswertung 32, die Auswertungen der Automatisierungsbereiche 30a, 30b, 30c dagegen demselben oder einem oder mehreren weiteren parallelen Auswertungssträngen der Automatisierungsauswertung 34 zugewiesen. Teile des Überwachungsbereichs 14, in dem sich keine interessierenden Bereiche 26, 30 befinden, sind Freibereiche, in denen zur Schonung von Rechenkapazitäten keine Auswertungen stattfinden müssen.

Anstelle des dargestellten stereoskopischen Verfahrens umfasst die Erfindung auch weitere dreidimensionale Bildsensoren, etwa eine Laufzeitkamera, die Lichtpulse oder moduliertes Licht aussendet und aus der Lichtlaufzeit auf Entfernungen schließt, oder aktiv triangulierende Kameras, welche Verzerrungen in der Struktur des Beleuchtungsmusters oder die Lage von Teilen des Beleuchtungsmusters im aufgenommenen Bild zur Berechnung von Entfernungsdaten ausnutzen.

Eine weitere Möglichkeit, einen entfernungsauflösenden Lichtempfänger umzusetzen, stellt ein tastendes Lichtgitter dar. Ein solches Lichtgitter besteht aus mehreren zu einer Reihe angeordneten Lichttastern, die einen entfernungsmessenden Lichtempfänger aufweisen, der auf einem Lichtlaufzeitverfahren oder einer Triangulation mittels eines Matrix- oder Zeilenempfängers oder einer ortsauflösenden Diode (PSD, position sensing device) basiert. Ein oder mehrere derartige triangulationsbasierte tastende Lichtgitter bilden also eine Approximation an einen dreidimensionalen Bildsensor, die von der Erfindung mit umfasst ist.

Um Probleme mit den Sichtbereichen der Kamera 12 zu vermeiden, bei denen Abschattungen oder schlechte Perspektiven zu unzureichenden dreidimensionalen Bilddaten führen, können mehrere Kameras 12 in unterschiedlicher Positionen zur Aufnahme von Bilddaten aus unterschiedlichen Perspektiven montiert sein. Deren Bilder werden dann gemeinsam zu einem Satz zweidimensionaler Bilddaten verrechnet, ehe sie wie oben beschrieben in Sicherheitsbereichen 26 einerseits und Automatisierungsbereichen 30 andererseits ausgewertet werden.

Ähnlich ist denkbar, weitere Sensoren wie eine weitere Kamera einzusetzen, um besonders wichtige Teilbereiche des Überwachungsbereichs 14 etwa mit einer höheren Zoomauflösung aufzunehmen. Bei verfügbarer Hardware kann dies auch dadurch emuliert werden, dass der gesamte Überwachungsbereich 14 mit einer sehr hohen Auflösung aufgenommen wird, die Weitergabe der Bilddaten oder zumindest deren Auswertung aber mit einer geringeren Auflösung vorgenommen wird. Dass zu der räumlichen Auflösung Gesagte gilt entsprechend für die zeitliche Auflösung, also die Wiederholungsfrequenz der Aufnahme.

Alternativ zu der strikten Trennung in Sicherheitsbereiche 26 und Automatisierungsbereiche 30 ist es möglich, zumindest einen Teil der Bildbereiche seriell Sicherheitsalgorithmen wie Auswertungsalgorithmen zu unterwerfen oder hybride Algorithmen zu verwenden, welche komplex und robust genug sind, die aus der Sicherheitstechnik geforderte zuverlässige Absicherung mit einer von der Automatisierungsaufgabe oder der Anwendung geforderten Verfügbarkeit zu verknüpfen.

## Patentansprüche

1. Optoelektronische Vorrichtung (10) mit einem optoelektronischen Sensor (12) zur Erfassung von ortsaufgelösten Informationen über einen Überwachungsbereich (14), wobei eine Auswertungseinheit (22) vorgesehen ist, welche aufgrund der Informationen einerseits Sicherheitsauswertungen (32) in Form einer Detektion unzulässiger Objekteingriffe in eine Gefahrenquelle umgebende Schutzfelder (26) und andererseits Automatisierungsauswertungen (34) in Form von Messungen von Formen oder Abmessungen, Qualitätsprüfungen, Klassifikationen oder Sortierungen vornehmen kann,
**dadurch gekennzeichnet,**
**dass** die Auswertungseinheit (22) dafür ausgebildet ist, voneinander getrennte Sicherheitsbereiche (26) und Automatisierungsbereiche (30) als jeweils voneinander getrennte Zonen überlappungsfrei innerhalb des Überwachungsbereichs (14) zu definieren, jeweils in den Sicherheitsbereichen (26) Sicherheitsauswertungen und in den Automatisierungsbereichen (30) Automatisierungsauswertungen vorzunehmen und so die Auswertungen für Sicherheitsaufgaben und Automatisierungsaufgaben voneinander abzutrennen, dass der optoelektronische Sensor (12) sowohl für die Erfassung der Informationen der Sicherheitsbereiche (26) wie der Automatisierungsbereiche (30) ausgebildet ist und dass die Sicherheitsbereiche (26) und die Automatisierungsbereiche (30) konfigurierbar sind.

2. Vorrichtung (10) nach Anspruch 1,
wobei der Sensor (12) einen pixelaufgelösten zeilen- oder matrixförmigen Bildsensor (13) aufweist, insbesondere ein visueller 3D-Sensor nach dem Prinzip der Stereoskopie, der aktiven Triangulation oder der Lichtlaufzeit ist.

3. Vorrichtung (10) nach Anspruch 1 oder 2,
wobei die Auswertungseinheit (22) dafür ausgebildet ist, die Sicherheitsbereiche (26) jeweils in Sicherheits-Auswertungszyklen und die Automatisierungsbereiche (30) in gleichen oder unabhängigen Automatisierungs-Auswertungszyklen auszuwerten, wobei die Sicherheitsbereiche (26) und die Automatisierungsbereiche (30) in jedem Auswertungszyklus gleich definiert sind.

4. Vorrichtung (10) nach Anspruch 1 oder 2,
wobei die Auswertungseinheit (22) dafür ausgebildet ist, die Sicherheitsbereiche (26) jeweils in Sicherheits-Auswertungszyklen und die Automatisierungsbereiche (30) in gleichen oder unabhängigen Automatisierungs-Auswertungszyklen auszuwerten, wobei die Sicherheitsbereiche (26) und die Automatisierungsbereiche (30) dynamisch über die Auswertungszyklen definiert sind, um insbesondere Bewegungen einer Gefahrenquelle, eines Fahrzeugs oder eines Roboters (24) zu folgen oder sich daran anzupassen.

5. Vorrichtung (10) nach einem der vorhergehenden Ansprüche,
wobei die Vorrichtung (10) eine Schnittstelle für den Empfang weiterer Informationen (42) über den Überwachungsbereich (14) aufweist, insbesondere zu einem Weggeber, Geschwindigkeitsmessern, einer Anlagen-, einer Fahrzeug- oder einer Robotersteuerung.

6. Vorrichtung (10) nach einem der vorhergehenden Ansprüche,
wobei die Auswertungseinheit (22) dafür ausgebildet ist, die Sicherheitsbereiche (26), Automatisierungsbereiche (30) und Freibereiche, zu denen keine Auswertung stattfindet, überlappungsfrei und den gesamten Überwachungsbereich (14) ausfüllend zu definieren.

7. Vorrichtung (10) nach einem der vorhergehenden Ansprüche,
wobei die Auswertungseinheit (22) dafür ausgebildet ist, Sicherheitsbereiche (26) und/oder Automatisierungsbereiche (30) parallelisiert auszuwerten, insbesondere indem die Vorrichtung (10) mindestens ein Auswertungselement (32) für Sicherheitsauswertungen und mindestens ein Auswertungselement (34) für Automatisierungsauswertungen aufweist.

8. Vorrichtung (10) nach einem der vorhergehenden Ansprüche,
wobei der Sensor (12) eine ROI-Einheit (38) aufweist, in welcher Definitionen der Sicherheitsbereiche (26) und/oder der Automatisierungsbereiche (30) als interessierende Bereiche abgelegt werden können, um die Sicherheitsbereiche (26) und/oder die Automatisierungsbereiche (30) bereits im Sensor (12) parallel und/oder unterschiedlich aufzunehmen, weiterzuleiten und/oder auszuwerten.

9. Vorrichtung (10) nach einem der vorhergehenden Ansprüche,
wobei eine Warn- und Absicherungseinrichtung (28) vorgesehen ist, welche auf Detektion der Auswertungseinheit (22) eines unzulässigen Objekteingriffs in einen Sicherheitsbereich (26) eine Warnung ausgeben oder die Gefahrenquelle (24) absichern kann.

10. Vorrichtung (10) nach einem der vorhergehenden Ansprüche,
wobei die Vorrichtung (10) in Komponenten (12, 13, 38, 22, 28) und Auswertungen (22, 32), welche mit Sicherheitsaufgaben befasst sind, sicher ausgelegt ist, insbesondere durch zweikanalige Ausführung, Selbsttests in Zyklen unterhalb der geforderten Ansprechzeit, diversitär-redundante Komponenten und Auswertungen oder selbstprüfende Algorithmen.

11. Vorrichtung (10) nach einem der vorhergehenden Ansprüche,
wobei eine Anzeigeeinrichtung (40) vorgesehen ist, um die Sicherheitsbereiche (26), die Automatisierungsbereiche (30) und/oder die Freibereiche kenntlich zu machen oder zu visualisieren, und wobei eine Konfigurationseinrichtung (40) vorgesehen ist, um die Sicherheitsbereiche (26), die Automatisierungsbereiche (30) und/oder die Freibereiche festzulegen oder zu ändern.

12. Vorrichtung (10) nach einem der vorhergehenden Ansprüche,
wobei der Sensor (12) Informationen aus Sicherheitsbereichen (26) mit unterschiedlicher zeitlicher und/oder räumlicher Auflösung an die Auswertungseinheit weitergeben kann als Informationen aus Automatisierungsbereichen (30), insbesondere mittels der ROI-Einheit (38).

13. Vorrichtung (10) nach einem der vorhergehenden Ansprüche,
wobei mehrere Sensoren vorgesehen sind, welche gegenüber dem Überwachungsbereich (14) unterschiedlich orientiert und/oder positioniert sind, um perspektivische Verzerrungen, Auflösungsmängel oder Abschattungseffekte zu vermeiden oder zu reduzieren.

14. Verfahren zur Absicherung eines Überwachungsbereichs (14) und zur visuellen Unterstützung einer automatisierten Bearbeitung in dem Überwachungsbereich (14), wobei ein optoelektronischer Sensor (12) ortsaufgelöste Informationen, insbesondere dreidimensionale Bilddaten, über den Überwachungsbereich (14) erfasst, und wobei aufgrund der Informationen einerseits Sicherheitsauswertungen (32) in Form einer Detektion unzulässiger Objekteingriffe in eine Gefahrenquelle (24) umgebende Schutzfelder und andererseits Automatisierungsauswertungen (34) in Form von Messungen von Formen oder Abmessungen, Qualitätsprüfungen, Klassifikationen, Sortierungen vorgenommen werden,
**dadurch gekennzeichnet,**
**dass** in dem Überwachungsbereich voneinander getrennte Sicherheitsbereiche (26) und Automatisierungsbereiche (30) als jeweils voneinander getrennte Zonen überlappungsfrei definiert werden, jeweils in den Sicherheitsbereichen (26) Sicherheitsauswertungen und in den Automatisierungsbereichen (30) Automatisierungsauswertungen vorgenommen werden und so die Auswertungen für Sicherheitsaufgaben und Automatisierungsaufgaben voneinander abgetrennt werden, dass die Informationen der Sicherheitsbereiche (26) und der Automatisierungsbereiche (30) von dem Sensor (12) erfasst werden und dass die Sicherheitsbereiche (26) und die Automatisierungsbereiche (30) konfigurierbar sind.

15. Verfahren nach Anspruch 14,
wobei die Sicherheitsbereiche (26) jeweils in Sicherheits-Auswertungszyklen und die Automatisierungsbereiche (30) in gleichen oder unabhängigen Automatisierungs-Auswertungszyklen ausgewertet werden, wobei die Sicherheitsbereiche (26) und die Automatisierungsbereiche (30) in jedem Auswertungszyklus gleich definiert sind oder dynamisch definiert sind, um insbesondere Bewegungen einer Gefahrenquelle, eines Fahrzeugs oder eines Roboters (24) zu folgen oder sich daran anzupassen.

16. Verfahren nach Anspruch 14 oder 15,
wobei die Sicherheitsbereiche (26) und/oder Automatisierungsbereiche (30) parallelisiert ausgewertet werden, insbesondere in unterschiedlichen Hardwarebausteinen, und wobei insbesondere die Parallelisierung schon in dem Sensor (12, 13) beginnt, in dem interessierende Bereiche definiert werden, welche Sicherheitsbereichen (26) und/oder Automatisierungsbereichen (30) entsprechen, und jeweils einem interessierenden Bereich Parameter wie Aufnahmefrequenz, Zoomfaktor, Helligkeiten, Auflösung der Informationserfassung, Bandbreite, Auflösung oder Wiederholfrequenz der Datenweitergabe, und/oder Auswertungsverfahren zugewiesen sind wie Detektion unzulässiger Objekte oder Klassifikation von Objekten.

17. Verfahren nach einem der Ansprüche 14 bis 16,
wobei auf Detektion eines unzulässigen Objekteingriffs in einen Sicherheitsbereich (26) eine Warnung ausgeben oder die Gefahrenquelle (24) abgesichert wird, und wobei der Sensor (12) und die Auswertung sicher ausgelegt ist, insbesondere durch zweikanalige Ausführung, Selbsttests in Zyklen unterhalb der geforderten Ansprechzeit, diversitär-redundante Komponenten und Auswertungen oder selbstprüfende Algorithmen.

## Claims

1. An optoelectronic apparatus (10) having an optoelectronic sensor (12) for detecting spatially resolved information on a monitored zone (14), wherein an evaluation unit (22) is provided which, on the basis of the information, can carry out safety evaluations (32) in the form of a detection of unpermitted object intrusions into protected fields (26) surrounding a danger source, on the one hand, and which can carry out automation evaluations (34) in the form of measurements of shapes or dimensions, quality inspections, classifications or sorting processes, on the other hand,
**characterised in that**
the evaluation unit (22) is configured to define mutually separate safety regions (26) and automation regions (30) as respective mutually separate zones free of overlap within the monitored zone (14), respectively to carry out safety evaluations in the safety regions (26) and automation evaluations in the automation regions (30) and to separate the evaluations for safety work and for automation work from one another such that the optoelectronic sensor (12) is configured both for the detection of the information of the safety regions (26) and of the automation regions (30) and such that the safety regions (26) and the automation regions (30) can be configured.

2. An apparatus (10) in accordance with claim 1,
wherein the sensor (12) has a pixel-resolved linear or matrix-shaped image sensor (13), in particular a visual 3D sensor according to the principle of stereoscopy, of active triangulation or of the time of flight.

3. An apparatus (10) in accordance with claim 1 or claim 2,
wherein the evaluation unit (22) is configured to evaluate the safety regions (26) in respective safety evaluation cycles and to evaluate the automation regions (30) in the same or in independent automation evaluation cycles, wherein the safety regions (26) and the automation regions (30) are defined the same in each evaluation cycle.

4. An apparatus (10) in accordance with claim 1 or claim 2,
wherein the evaluation unit (22) is configured to evaluate the safety regions (26) in respective safety evaluation cycles and to evaluate the automation regions (30) in the same or in independent automation evaluation cycles, wherein the safety regions (26) and the automation regions (30) are defined dynamically over the evaluation cycles in order in particular to follow or to adapt to movements of a danger source, of a vehicle or of a robot (24).

5. An apparatus (10) in accordance with any one of the preceding claims,
wherein the apparatus (10) has an interface for the reception of further information (42) on the monitored zone (14), in particular to an encoder, speed measurement devices, a system control, a vehicle control or a robot control.

6. An apparatus (10) in accordance with any one of the preceding claims,
wherein the evaluation unit (22) is configured to define the safety regions (26), automation regions (30) and free regions for which no evaluation takes place without overlap and filling the total monitored zone (14).

7. An apparatus (10) in accordance with any one of the preceding claims,
wherein the evaluation unit (22) is configured to evaluate safety regions (26) and/or automation regions (30) in parallelised form, in particular in that the apparatus (10) has at least one evaluation element (32) for safety evaluations and at least one evaluation element (34) for automation evaluations.

8. An apparatus (10) in accordance with any one of the preceding claims,
wherein the sensor (12) has a ROI unit (38) in which definitions of the safety regions (26) and/or of the automation regions (30) can be stored as regions of interest in order already to record the safety regions (26) and/or the automation regions (30) in parallel and/or differently in the sensor (12), to forward them and/or to evaluate them.

9. An apparatus (10) in accordance with any one of the preceding claims,
wherein a warning and securing device (28) is provided which can output a warning or secure the danger source (24) on detection by the evaluation unit (22) of an unpermitted object intrusion into a safety region (26).

10. An apparatus (10) in accordance with any one of the preceding claims,
wherein the apparatus (10) is designed as safe in components (12, 13, 38, 22, 28) and evaluations (22, 32) which deal with safety work, in particular by a two-channel design, self-tests in cycles below the required response time, diversely redundant components and evaluations or self-testing algorithms.

11. An apparatus (10) in accordance with any one of the preceding claims,
wherein a display device (40) is provided to mark or to visualise the safety regions (26), the automation regions (30) and/or the free regions, and wherein a configuration device (40) is provided to define or to vary the safety regions (26), the automation regions (30) and/or the free regions.

12. An apparatus (10) in accordance with any one of the preceding claims,
wherein the sensor (12) can forward information from safety regions (26) to the evaluation unit with a different time resolution and/or spatial resolution than information from automation regions (30), in particular using the ROI unit (38).

13. An apparatus (10) in accordance with any one of the preceding claims,
wherein a plurality of sensors are provided which are oriented and/or positioned differently with respect to the monitored zone (14) to avoid or to reduce perspective distortions, resolution deficiencies or shadowing effects.

14. A method for securing a monitored zone (14) and for a visual assistance of an automated processing in the monitored zone (14), wherein an optoelectronic sensor (12) detects spatially resolved information, in particular three-dimensional image data, on the monitored zone (14), and wherein, on the basis of the information, safety evaluations (32) in the form of a detection of unpermitted object intrusions into protected fields surrounding a danger source (24) are carried out, on the one hand, and automation evaluations (34) in the form of measurements of shapes or dimensions, quality inspections, classifications or sorting processes are carried out, on the other hand,
**characterised in that**
mutually separate safety regions (26) and automation regions (30) are defined as respective mutually separate zones free of overlap within the monitored zone, respective safety evaluations are carried out in the safety regions (26) and automation evaluations in the automation regions (30) and the evaluations for safety work and for automation work are separated from one another such that the information on the safety regions (26) and on the automation regions (30) are detected by the sensor (12) and such that the safety regions (26) and the automation regions (30) can be configured.

15. A method in accordance with claim 14,
wherein the safety regions (26) are each evaluated in safety evaluation cycles and the automation region (30) are each evaluated in the same or in independent automation evaluation cycles, wherein the safety regions (26) and the automation regions (30) are defined the same in every evaluation cycle or are dynamically defined in order in particular to follow or to adapt to movements of a danger source, of a vehicle or of a robot (24).

16. A method in accordance with claim 14 or claim 15,
wherein the safety regions (26) and/or the automation regions (30) are evaluated in a parallelized manner, in particular in different hardware modules, and wherein the parallelisation in particular already starts in the sensor (12, 13) in which regions of interest are defined which correspond to safety regions (26) and/or to automation regions (30) and parameters such as recording frequency, zoom factor, brightness levels, resolution of the information detection, bandwidth, resolution or refresh rate of the data forwarding and/or evaluation processes such as the detection of unpermitted objects or the classification of objects are respectively assigned to a region of interest.

17. A method in accordance with any one of the claims 14 to 16,
wherein a warning is output or the danger source (24) is secured on detection of an unpermitted object intrusion in a safety region (26), and wherein the sensor (12) and the evaluation are designed as safe, in particular by a two-channel design, self-tests in cycles below the required response time, diversely redundant components and evaluations or self-testing algorithms.

## Revendications

1. Dispositif optoélectronique (10) comprenant un capteur optoélectronique (12) pour détecter des informations à résolution locale sur une zone de surveillance (14), dans lequel il est prévu une unité d'évaluation (22) qui, en se basant sur les informations, peut procéder d'une part à des évaluations de sécurité (32) sous la forme d'une détection d'interventions inadmissibles d'objets dans un champ protégé (26) entourant une zone à risque, et d'autre part à des évaluations d'automatisation (34) sous la forme de mesures de formes, de dimensions, de contrôles de qualité, de classifications ou de tris,
**caractérisé en ce que**
l'unité d'évaluation (22) est réalisée pour définir des zones de sécurité (26) et des zones d'automatisation (30) séparées les unes des autres sous forme de zones respectivement séparées et sans chevauchement à l'intérieur de la zone de surveillance (14), pour procéder dans les zones de sécurité respectives (26) à des évaluations de sécurité et dans les zones d'automatisation (30) à des évaluations d'automatisation et ainsi pour séparer les unes des autres les évaluations pour des tâches de sécurité et pour des tâches d'automatisation, de sorte que le capteur optoélectronique (12) est réalisé aussi bien pour la détection des informations sur les zones de sécurité (26) que sur les zones d'automatisation (30), et **en ce que** les zones de sécurité (26) et les zones d'automatisation (30) sont susceptibles d'être configurées.

2. Dispositif (10) selon la revendication 1,
dans lequel le capteur (12) comprend un capteur d'images (13) sous forme de ligne ou de matrice à résolution par pixel, en particulier un capteur visuel tridimensionnel selon le principe de la stéréoscopie, de la triangulation active, ou du temps de parcours de la lumière.

3. Dispositif (10) selon la revendication 1 ou 2,
dans lequel l'unité d'évaluation (22) est réalisée pour évaluer les zones de sécurité (26) respectivement dans des cycles d'évaluation de sécurité, et les zones d'automatisation (30) dans les mêmes cycles d'évaluation d'automatisation ou dans des cycles d'évaluation d'automatisation indépendants, et les zones de sécurité (26) et les zones d'automatisation (30) sont définies de manière égale dans chaque cycle d'évaluation.

4. Dispositif (10) selon la revendication 1 ou 2,
dans lequel l'unité d'évaluation (22) est réalisée pour évaluer les zones de sécurité (26) respectivement dans des cycles d'évaluation de sécurité, et les zones d'automatisation (30) dans les mêmes cycles d'évaluation d'automatisation ou dans des cycles d'évaluation d'automatisation indépendants, et les zones de sécurité (26) et les zones d'automatisation (30) sont définies de manière dynamique sur les cycles d'évaluation, en particulier afin de suivre des mouvements d'une source de risque, d'un véhicule ou d'un robot (24), ou de s'adapter à ces mouvements.

5. Dispositif (10) selon l'une des revendications précédentes,
dans lequel le dispositif (10) comprend une interface pour la réception d'autres informations (42) sur la zone de surveillance (14), en particulier vers un capteur de course, des dispositifs de mesure de vitesse, vers une commande d'installation, une commande de véhicule ou une commande de robot.

6. Dispositif (10) selon l'une des revendications précédentes,
dans lequel l'unité d'évaluation (22) est réalisée pour définir les zones de sécurité (26), les zones d'automatisation (30) et des zones libres pour lesquelles il ne se produit aucune évaluation, sans chevauchement et en remplissant la totalité de la zone de surveillance (14)

7. Dispositif (10) selon l'une des revendications précédentes,
dans lequel l'unité d'évaluation (22) est réalisée pour évaluer des zones de sécurité (26) et/ou des zones d'automatisation (30) de manière parallèle, en particulier en ce que le dispositif (10) comprend au moins un élément d'évaluation (32) pour des évaluations de sécurité et au moins un élément d'évaluation (34) pour des évaluations d'automatisation.

8. Dispositif (10) selon l'une des revendications précédentes,
dans lequel le capteur (12) comprend une unité ROI (38) dans laquelle des définitions des zones de sécurité (26) et/ou des zones d'automatisation (30) peuvent être mémorisées à titre de zones intéressantes, afin d'appréhender, de transmettre et/ou d'évaluer les zones de sécurité (26) et/ou les zones d'automatisation (30) de manière parallèle et/ou différentes déjà dans le capteur (12).

9. Dispositif (10) selon l'une des revendications précédentes,
dans lequel il est prévu un système d'avertissement et de sécurisation (28) qui, après détection par l'unité d'évaluation (22) d'une intervention inadmissible d'un objet dans une zone de sécurité (26), peut délivrer un avertissement ou sécuriser la source de risque (24).

10. Dispositif (10) selon l'une des revendications précédentes,
dans lequel le dispositif (10) est conçu de manière sécurisée en composants (12, 13, 38, 22, 28) et en évaluations (22, 32), qui traitent des tâches de sécurité, en particulier par une réalisation en deux canaux, par des autotests en cycles au-dessous du temps de réaction requis, par des composants diversitaires/redondants et des évaluations diversitaires/redondantes ou des algorithmes à autocontrôle.

11. Dispositif (10) selon l'une des revendications précédentes,
dans lequel il est prévu un système d'affichage (40) afin de rendre reconnaissable ou de visualiser les zones de sécurité (26), les zones d'automatisation (30) et/ou les zones libres, et dans lequel il est prévu un système de configuration (40) afin de fixer ou de modifier les zones de sécurité (26), les zones d'automatisation (30) et/ou les zones libres.

12. Dispositif (10) selon l'une des revendications précédentes,
dans lequel le capteur (12) est capable de transmettre des informations provenant des zones de sécurité (26) à l'unité d'évaluation avec une résolution temporelle et/ou spatiale différente par rapport à des informations provenant des zones d'automatisation (30), en particulier au moyen de l'unité ROI (38).

13. Dispositif (10) selon l'une des revendications précédentes,
dans lequel il est prévu plusieurs capteurs qui sont orientés et/ou positionnés de façon différente par rapport à la zone de surveillance (14), afin d'éviter ou de réduire des distorsions de perspective, des défauts de résolution ou des effets de masquage.

14. Procédé pour sécuriser une zone de surveillance (14) et pour assister visuellement un usinage automatisé dans la zone de surveillance (14), dans lequel un capteur optoélectronique (12) détecte des informations à résolution locale, en particulier des données d'images tridimensionnelles sur la zone de surveillance (14), et dans lequel en se basant sur les informations, on procède d'une part à des évaluations de sécurité (32) sous la forme d'une détection d'interventions inadmissibles d'objets dans des champs protégés entourant une source de risque (24) et d'autre part à des évaluations d'automatisation (34) sous la forme de mesures de formes ou de dimensions, de contrôles de qualité, de classifications ou de tris,
**caractérisé en ce que**
on définit dans la zone de surveillance des zones de sécurité (26) et des zones d'automatisation (30) séparées les unes des autres, comme des zones séparées respectivement les unes des autres et sans chevauchement, on procède respectivement dans les zones de sécurité (26) à des évaluations de sécurité et dans les zones d'automatisation (30) à des évaluations d'automatisation, et on sépare ainsi les évaluations pour des tâches de sécurité et pour des tâches d'automatisation les unes par rapport aux autres, **en ce que** les informations sur les zones de sécurité (26) et sur les zones d'automatisation (30) sont détectées par le capteur (12), et **en ce que** les zones de sécurité (26) et les zones d'automatisation (30) sont susceptibles d'être configurées.

15. Procédé selon la revendication 14,
dans lequel les zones de sécurité (26) sont évaluées respectivement dans des cycles d'évaluation de sécurité et les zones d'automatisation (30) sont évaluées dans les mêmes cycles d'évaluation d'automatisation ou dans des cycles d'évaluation d'automatisation indépendants, et les zones de sécurité (28) et les zones d'automatisation (30) sont définies de manière égale dans chaque cycle d'évaluation ou sont définies de manière dynamique, en particulier afin de suivre des mouvements d'une source de risque, d'un véhicule ou d'un robot (24), ou de s'adapter à ces mouvements.

16. Procédé selon la revendication 14 ou 15,
dans lequel les zones de sécurité (26) et/ou les zones d'automatisation (30) sont évaluées de manière parallèle, en particulier dans des composants matériels différents, et dans lequel la parallélisation commence en particulier déjà dans le capteur (12, 13) dans lequel on définit des zones intéressantes qui correspondent à des zones de sécurité (26) et/ou à des zones d'automatisation (30) et on attribue respectivement à une zone intéressante des paramètres tels que la fréquence d'enregistrement, le facteur de zoom, la luminance, la résolution de détection d'informations, la largeur de bande, la résolution ou la fréquence de répétition du transfert de données, et/ou des procédures d'évaluation telles que la détection d'objets inadmissibles ou la classification d'objets.

17. Procédé selon l'une d'revendication 14 à 16,
dans lequel en cas de détection d'une intervention d'objet inadmissible dans une zone de sécurité (26) on délivre un avertissement ou l'on sécurise la source de risque (24), et dans lequel le capteur (12) et l'évaluation sont conçus de manière sécurisée, en particulier par une réalisation à deux canaux, des autotests dans des cycles au-dessous du temps de réaction requis, des composants diversitaires/redondants et des évaluations diversitaires/redondantes, ou des algorithmes à autocontrôle.
